# DEMANDE DE BREVET EUROPEEN

(11) **EP 0 695 904 A1**
(43) Date de publication de la demande: **07.02.1996**
(21) Numéro de dépôt: 95440051.1
(22) Date de dépôt: 02.08.1995
(51) Int. Cl.: F16L 41/06

(54) **Dispositif de prise de branchement pour distribution de fluide gazeux**

(30) Priorité: 04.08.1994 FR 9409833
(71) Demandeur: ANCIENS ETABLISSEMENTS MAURICE PIEDFORT (Société Anonyme), F-91320 Wissous (FR)
(72) Inventeur: Anspach, Jean-Michel, B-1200 Bruxelles (BE)
(74) Mandataire: Nuss, Pierre

(57) **Abrégé**

Dispositif caractérisé en ce qu'il est essentiellement constitué, d'une part, par un corps principal (3) comprenant une chemise extérieure (4) fixée sur la conduite du réseau (1) et au moins une tubulure (5) pour le branchement d'au moins une conduite (2) de dérivation et, d'autre part, par un insert creux (6) qui fournit un passage (7) pour le gaz entre la conduite du réseau (1) et la tubulure de branchement (5) et qui comporte un moyen de blocage automatique (8) du passage (7) pour le gaz en cas de surdébit une augmentation dudit débit entraînant un blocage d'un passage (7) par déplacement d'un élément mobile (9) vers le haut et son appui étanche contre un siège percé (11) dont l'ouverture (11') constitue l'orifice d'entrée du passage (7) pour le gaz entre la conduite du réseau (1) et la tubulure de branchement (5) au moins présente.

## Description

La présente invention concerne le domaine de la distribution de fluides, plus particulièrement de gaz, et a pour objet un dispositif de prise de branchement pourvu d'un moyen de blocage automatique en cas de surdébit.

Il existe actuellement déjà de nombreux types de prises de branchement ainsi que des dispositifs ou systèmes de sécurité, interrompant l'alimentation en gaz d'une conduite secondaire reliée au réseau, en cas de chute de pression, de surdébit, de rupture de la conduite secondaire, etc.

Toutefois, ces dispositifs ou systèmes de sécurité connus sont généralement situés dans la conduite ou dans le tuyau de dérivation ou de branchement secondaire et non pas directement intégrés dans la prise elle-même, ce qui entraîne une opération de montage supplémentaire et ne permet pas de couper l'alimentation au niveau du point de piquage même.

En outre, ces dispositifs et systèmes de sécurité connus sont constitués par l'assemblage complexes de plusieurs éléments mobiles entre eux tels que des clapets, des charnières, des ressorts, etc., qui sont sujets au vieillissement, à la fatigue ou à l'usure ou encore contrôlés par des dispositifs électriques ou électroniques, qui ne peuvent garantir une sécurité totale excluant tout dysfonctionnement.

La présente invention a notamment pour objet de pallier l'ensemble des inconvénients précités.

A cet effet, elle a pour objet un dispositif de prise de branchement pour des réseaux de distribution de fluides gazeux, destiné à assurer la liaison entre une conduite d'un réseau et une conduite de dérivation ou de distribution, caractérisé en ce qu'il est essentiellement constitué, d'une part, par un corps principal comprenant une chemise extérieure fixée, de manière étanche aux gaz et en s'étendant sensiblement verticalement, sur la conduite du réseau et au moins une tubulure pour le branchement d'au moins une conduite de dérivation ou de distribution et, d'autre part, par un insert creux monté dans ladite chemise extérieure, qui fournit un passage pour le gaz entre la conduite du réseau et la tubulure de branchement au moins présente et qui comporte un moyen de blocage automatique du passage pour le gaz en cas de surdébit, se présentant principalement sous la forme d'un élément mobile, de forme et de poids déterminés, disposé dans ledit insert creux et maintenu dans un état de sustentation éloigné de son support de rétention, autorisant le passage du gaz, sous l'action de la pression dynamique du flux gazeux s'écoulant de la conduite du réseau vers la ou les tubulures, lorsque le débit dudit flux est compris dans une plage de valeurs prédéterminées, une augmentation dudit débit au-delà de ladite plage entraînant un déplacement dudit élément mobile vers le haut à l'encontre de la pesanteur et son appui étanche contre un siège percé dont l'ouverture constitue l'orifice d'entrée du passage pour le gaz entre la conduite du réseau et la tubulure de branchement au moins présente.

L'invention sera mieux comprise grâce à la description ci-après, qui se rapporte à un mode de réalisation préféré, donné à titre d'exemple non limitatif, et expliqué avec référence aux dessins annexés, dans lesquels:
la figure 1 est une vue en élévation latérale et en coupe d'un dispositif de prise de branchement conforme à l'invention en cours d'installation;
la figure 2 est une vue similaire à celle de la figure 1, le dispositif de prise de branchement étant installé, et,
la figure 3 est une vue de détail en coupe du moyen de blocage automatique en cas de surdébit, faisant partie du dispositif de prise de branchement représenté aux figures 1 et 2.

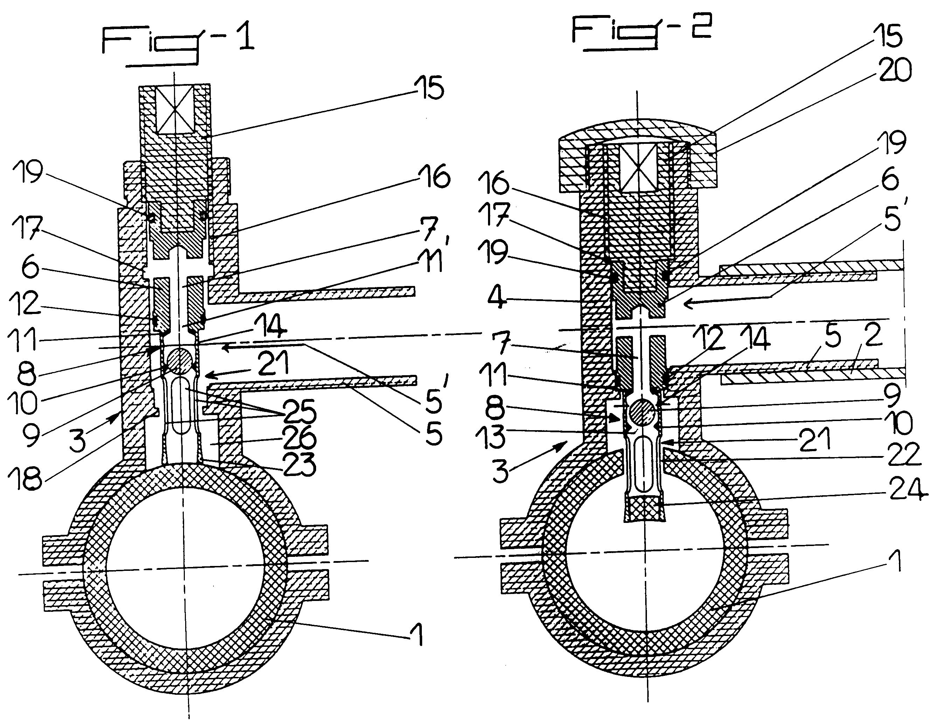

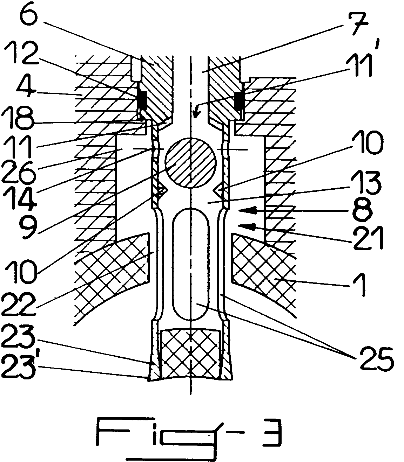

Conformément à l'invention et comme le montrent les figures 1 et 2 des dessins annexés, le dispositif de prise de branchement est essentiellement constitué, d'une part, par un corps principal 3 comprenant une chemise extérieure 4 fixée, de manière étanche aux gaz et en s'étendant sensiblement verticalement, sur la conduite du réseau 1 et au moins une tubulure 5 pour le branchement d'au moins une conduite 2 de dérivation ou de distribution et, d'autre part, par un insert creux 6 monté dans ladite chemise extérieure 4, qui fournit un passage 7 pour le gaz entre la conduite du réseau 1 et la tubulure de branchement 5 au moins présente et qui comporte un moyen de blocage automatique 8 du passage 7 pour le gaz en cas de surdébit, se présentant principalement sous la forme d'un élément mobile 9, de forme et de poids déterminés, disposé dans ledit insert creux 6 et maintenu dans un état de sustentation éloigné de son support de rétention 10, autorisant le passage du gaz, sous l'action de la pression dynamique du flux gazeux s'écoulant de la conduite du réseau 1 vers la ou les tubulures 5, lorsque le débit dudit flux est compris dans une plage de valeurs prédéterminées, une augmentation dudit débit au-delà de ladite plage entraînant un déplacement dudit élément mobile 9 vers le haut à l'encontre de la pesanteur et son appui étanche contre un siège percé 11 dont l'ouverture 11' constitue l'orifice d'entrée du passage 7 pour le gaz entre la conduite du réseau 1 et la tubulure de branchement 5 au moins présente.

Il convient de noter que, après déclenchement du moyen de blocage 8, l'élément mobile 9 reste en appui étanche sur le siège percé 11, et donc que le blocage du passage 7 pour le gaz reste effectif, aussi longtemps que la différence de pression existant entre la conduite du réseau 1 et la ou les tubulures de branchement 5 est suffisante pour assurer le maintien dudit élément mobile 9 en position et en appui contre ledit siège percé 11.

Bien que les figures des dessins annexés ne montrent qu'une seule tubulure de branchement 5, il est évident pour l'homme de métier qu'il est possible de prévoir plusieurs tubulures 5 réparties sur le pourtour de la chemise extérieure 4 ou superposées avec des espacements successifs, sur la hauteur de ladite chemise extérieure 4, chacune desdites tubulures 5 devant alors être reliées de manière étanche à l'une des sorties du passage 7 pour le gaz fourni par l'insert creux 6 et pouvant être réalisé d'un seul tenant avec la chemise extérieure (Fig. 1 et 2) ou être rapportée, par exemple par vissage, au niveau d'une ouverture 5' correspondante de la chemise extérieure 4.

La fixation du corps principal 3 sur la conduite du réseau 1 peut être réalisée soit par un organe ou une pièce d'assemblage indépendante adaptée, soit pour un organe de fixation par serrage en forme de collier ou de manchon en deux parties, l'une d'entre elles pouvant être constituée par un prolongement inférieur de la chemise extérieure 4 (Voir figures 1 et 2).

En vue d'éviter toute fuite de gaz incontrôlée, en service normal ou en cas de dysfonctionnement et de coupure consécutive d'alimentation, un joint d'étanchéité aux gaz 12 périphérique est avantageusement disposé entre l'insert creux 6 et la paroi interne de la chemise extérieure 4, à un emplacement situé entre l'ouverture 5' de la chemise extérieure 4 prolongée par la tubulure de branchement 5 la plus basse et la ou les ouverture(s) d'admission 13, 14 de gaz dans l'insert creux 6, afin d'obliger la totalité du gaz à transiter à travers le passage 7 ménagée dans ledit insert creux 6 pour s'écouler dans la ou les tubulure(s) de branchement 5.

Selon une caractéristique de l'invention, représentée aux figures 1 et 2 des dessins annexés, l'insert creux 6 présente préférentiellement une structure cylindrique et est pourvu dans sa partie supérieure d'un bouchon 15 portant un filetage extérieur et pouvant coopérer avec une portion intérieurement filetée 16 de la chemise extérieure 4 en vue du montage par vissage dudit insert creux 6 dans ladite chemise extérieure 4, le calage en position de montage dudit insert 6 dans ladite chemise extérieure 4 étant assuré au moyen d'un palier supérieur 17, situé entre l'ouverture 5' prolongée par la tubulure de branchement 5 et la portion intérieurement filetée 16 et d'un palier inférieur 18, situé entre ladite ouverture 5' prolongée par la tubulure de branchement 5 et la partie inférieure de la chemise extérieure 4, reposant sur la conduite du réseau 1, à chacun desdits paliers 17 et 18 étant associé un joint respectif 19 et 12 assurant l'étanchéité aux gaz entre l'insert creux 6 et la chemise extérieure 4.

En vue du vissage précité, le bouchon 15 peut être pourvu, par exemple, au niveau de sa face supérieure apparente d'un renfoncement en forme de fente ou de six pans creux (Figures 1 et 2).

Lorsque l'insert creux 6 est situé dans sa position de montage définitive et calée dans la chemise extérieure 4, la face supérieure du bouchon 15 est avantageusement de niveau avec le bord supérieur de la chemise extérieure 4, l'ensemble étant recouvert d'un capuchon de protection amovible 20.

Conformément à un mode de réalisation préférentiel de l'invention, représentée plus particulièrement à la figure 3 des dessins annexés, I'élément mobile 9 du moyen de blocage 8 se présente sous la forme d'une bille logée dans une portion inférieure 21 de l'insert creux 6, dirigée vers ou s'étendant partiellement dans l'ouverture de distribution 22 ménagée dans la conduite du réseau 1 au niveau de l'emplacement de fixation de la chemise extérieure 4, ladite portion inférieure 21 comprenant, en outre, des ergots radiaux internes ou une nervure radiale interne 10 distant du siège percé 11 vers le bas, lesdits ergots ou ladite nervure formant le support de rétention de l'élément mobile 9 au repos.

Afin de pouvoir régler de manière précise le débit seuil à partir duquel le moyen de blocage 8 doit être enclenché, l'insert creux 6 comporte avantageusement une ouverture d'admission de gaz principale 13 dont le flux de gaz traversant participe positivement à la sustentation de l'élément mobile 9 du moyen de blocage 8 et au moins une ouverture d'admission de gaz secondaire 14 dont le flux de gaz traversant ne participe pas à la sustentation dudit élément mobile 9 ou y participe avec une action contraire à celle procurée par le flux de gaz entrant par l'ouverture d'admission principale 13.

La ou les ouverture(s) d'admission secondaire(s) 14 présente(nt) des dimensions calibrées en fonction, d'une part, du poids, de la forme et des dimensions de l'élément mobile 9 de blocage, d'autre part, des dimensions de l'ouverture d'admission principale 13 et, enfin, des valeurs extrêmes de la plage de valeurs de débit correspondant à une distribution normale de gaz.

Comme le montrent les figures 1 à 3 des dessins annexés, l'ouverture d'admission principale 13 est délimitée par les ergots ou la nervure 10 de support de l'élément mobile 9 au repose présent dans la portion inférieure 21 de l'insert creux 6.

Ainsi, la pression du flux gazeux soulève tout d'abord l'élément mobile 9 de son support de rétention 10 dans l'insert creux 6, lors de la mise en service de la prise de branchement, en créant ainsi simultanément une ouverture ou un orifice d'admission pour le flux gazeux et le maintient ensuite dans une position suspendue donnée fixée par l'équilibre poids de l'élément mobile 9/pression dynamique du flux gazeux principal.

De même, la ou les ouverture(s) d'admission secondaire(s) 14 est (sont) ménagée(s) dans la paroi latérale de la portion inférieure 21 de l'insert creux 6 et est (sont) située(s) entre les ergots ou la nervure 10 de support de l'élément mobile 9 au repos et le siège percé 11 formant l'orifice d'entrée du passage 7 pour le gaz.

Afin d'aboutir à des actions symétriques sur l'élément mobile 9, il peut être prévu de réaliser plusieurs ouvertures d'admission secondaires 14 réparties uniformément sur la circonférence de la paroi latérale de la portion inférieure 21 de l'insert creux 6, et préférentiellement deux ouvertures d'admission secondaires 14 ménagées dans la paroi latérale de la portion inférieure 21 en étant diamétralement opposées.

Le flux gazeux pénétrant par les ouvertures d'admission secondaires 14 est donc soustrait au flux principal passant par l'ouvertures d'admission principale 13 et le simple réglage de leur diamètre permet, après établissement préalable de tables de correspondance, de fixer précisément le débit ou la différence de pression réseau/tubulure qui déclenche le blocage du passage 7, en fonction du poids et de la dimension de la bille 9, de la section de passage de l'ouverture d'admission principale 13 et du diamètre de la partie de la portion inférieure 21 contenant ladite bille 9 et située entre le support de rétention 10 et le siège percé 11.

Selon un mode de réalisation de l'invention particulièrement adaptée à une mise en oeuvre en rapport avec des conduites de réseaux 1 en un matériau synthétique, notamment en polyéthylène, la portion inférieure 21 de l'insert creux 6 est munie d'un outil 23 de coupe ou de perforation réalisant la découpe ou le perçage de l'ouverture de distribution 22 dans la conduite du réseau 1 au cours de l'introduction de l'insert creux 6 dans la chemise extérieure 4.

De manière avantageuse, le tranchant de l'outil de coupe 23 est situé au niveau du bord libre 23' de la portion inférieure 21 de l'insert creux 6, cette dernière portion présentant une conformation intérieure légèrement conique en direction dudit bord libre 23' de manière à pouvoir retenir la portion de conduite découpée ou coupon 24 lors de la réalisation de l'ouverture de distribution 22 (Figure 3).

Afin de permettre l'alimentation en gaz des ouvertures d'admission 13 et 14 en cas de présence d'un outil de perforation plein ou d'un coupon 24 bouchant l'ouverture axiale de la portion inférieure 21, la paroi latérale de ladite portion inférieure 21 est pourvue d'orifices oblongs 25 situés entre le bord libre 23' de la portion inférieure 21 et les ergots ou la nervure de support 10 de l'élément mobile 9 au repos et s'étendant de l'intérieur de la conduite du réseau 1 jusque dans une chambre 26 de la chemise extérieure 4, formée autour de la portion inférieure 21 de l'insert creux 6 et alimentant la ou les ouvertures d'admission secondaires 14.

La chemise extérieure 4, la tubulure 5, le bouchon 15 et le capuchon 20 sont préférentiellement réalisés en un matériau synthétique et l'insert creux 21 en un matériau métallique non oxydant.

En outre, le siège percé 11 et la nervure radiale interne 10 sont préférentiellement recouverts d'un matériau du type caoutchouc afin de réaliser une étanchéité aux gaz lorsque l'élément mobile 9 se trouve en appui contre eux.

Dans le cas d'une application en rapport avec des conduites de réseau métalliques 1 pour lesquels le perçage est effectué préalablement à l'installation de la prise de branchement, le corps principal 3, la ou les tubulures 5, la partie de l'insert creux 21 comprenant le passage 7, le bouchon 15 et le capuchon 20 pourront être réalisés d'un seul tenant, seule la portion inférieure 21 de l'insert creux 6, contenant le moyen de blocage 8, étant un élément rapporté.

Ainsi, grâce à l'invention il est possible de réaliser une prise de branchement comprenant un moyen de blocage de sécurité intégré, de structure très simple, non sujet au vieillissement ou à l'usure, réagissant directement et de manière très sensible et précise à l'augmentation de débit et bloquant la sortie de gaz aussi longtemps que la cause du blocage n'est pas supprimée.

Bien entendu, I'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Dispositif de prise de branchement pour des réseaux de distribution de fluides gazeux, destiné à assurer la liaison entre une conduite d'un réseau et une conduite de dérivation ou de distribution, caractérisé en ce qu'il est essentiellement constitué, d'une part, par un corps principal (3) comprenant une chemise extérieure (4) fixée, de manière étanche aux gaz et en s'étendant sensiblement verticalement, sur la conduite du réseau (1) et au moins une tubulure (5) pour le branchement d'au moins une conduite (2) de dérivation ou de distribution et, d'autre part, par un insert creux (6) monté dans ladite chemise extérieure (4), qui fournit un passage (7) pour le gaz entre la conduite du réseau (1) et la tubulure de branchement (5) au moins présente et qui comporte un moyen de blocage automatique (8) du passage (7) pour le gaz en cas de surdébit, se présentant principalement sous la forme d'un élément mobile (9), de forme et de poids déterminés, disposé dans ledit insert creux (6) et maintenu dans un état de sustentation éloigné de son support de rétention (10), autorisant le passage du gaz, sous l'action de la pression dynamique du flux gazeux s'écoulant de la conduite du réseau (1) vers la ou les tubulures (5), lorsque le débit dudit flux est compris dans une plage de valeurs prédéterminées, une augmentation dudit débit au-delà de ladite plage entraînant un déplacement dudit élément mobile (9) vers le haut à l'encontre de la pesanteur et son appui étanche contre un siège percé (11) dont l'ouverture (11') constitue l'orifice d'entrée du passage (7) pour le gaz entre la conduite du réseau (1) et la tubulure de branchement (5) au moins présente.

2. Dispositif de prise de branchement selon la revendication 1, caractérisé en ce qu'un joint d'étanchéité aux gaz (12) périphérique est disposé entre l'insert creux (6) et la paroi interne de la chemise extérieure (4), à un emplacement situé entre l'ouverture (5') de la chemise extérieure (4) prolongée par la tubulure de branchement (5) la plus basse et la ou les ouverture(s) d'admission (13, 14) de gaz dans l'insert creux (6), afin d'obliger la totalité du gaz à transiter à travers le passage (7) ménagée dans ledit insert creux (6) pour s'écouler dans la ou les tubulure(s) de branchement (5).

3. Dispositif de prise de branchement selon l'une quelconque des revendications 1 et 2, caractérisé en ce que l'insert creux (6) présente une structure cylindrique et est pourvu dans sa partie supérieure d'un bouchon (15) portant un filetage extérieur et pouvant coopérer avec une portion intérieurement filetée (16) de la chemise extérieure (4) en vue du montage par vissage dudit insert creux (6) dans ladite chemise extérieure (4), le calage en position de montage dudit insert (6) dans ladite chemise extérieure (4) étant assuré au moyen d'un palier supérieur (17), situé entre l'ouverture (5') prolongée par la tubulure de branchement (5) et la portion intérieurement filetée (16) et d'un palier inférieur (18), situé entre ladite ouverture (5') prolongée par la tubulure de branchement (5) et la partie inférieure de la chemise extérieure (4), reposant sur la conduite du réseau (1), à chacun desdits paliers (17 et 18) étant associé un joint respectif (19 et 12) assurant l'étanchéité aux gaz entre l'insert creux (6) et la chemise extérieure(4).

4. Dispositif de prise de branchement selon l'une quelconque des revendications 1 à 3, caractérisé en ce que l'élément mobile (9) du moyen de blocage (8) se présente sous la forme d'une bille logée dans une portion inférieure (21) de l'insert creux (6), dirigée vers ou s'étendant partiellement dans l'ouverture de distribution (22) ménagée dans la conduite du réseau (1), au niveau de l'emplacement de fixation de la chemise extérieure (4), ladite portion inférieure (21) comprenant, en outre, des ergots radiaux internes ou une nervure radiale interne (10) distant du siège percé (11) vers le bas.

5. Dispositif de prise de branchement selon l'une quelconque des revendications 1 à 4, caractérisé en ce que l'insert creux comporte une ouverture d'admission de gaz principale (13) dont le flux de gaz traversant participe positivement à la sustentation de l'élément mobile (9) du moyen de blocage (8) et au moins une ouverture d'admission de gaz secondaire (14) dont le flux de gaz traversant ne participe pas à la sustentation dudit élément mobile (9) ou y participe avec une action contraire à celle procurée par le flux de gaz entrant par l'ouverture d'admission principale (13).

6. Dispositif de prise de branchement selon la revendication 5, caractérisé en ce que la ou les ouverture(s) d'admission secondaire(s) présente(nt) des dimensions calibrées en fonction, d'une part, du poids, de la forme et des dimensions de l'élément mobile (9) de blocage, d'autre part, des dimensions de l'ouverture d'admission principale (13) et, enfin, des valeurs extrêmes de la plage de valeurs de débit correspondant à une distribution normale de gaz.

7. Dispositif de prise de branchement selon les revendications 5 et 6, caractérisé en ce que l'ouverture d'admission principale (13) est délimitée par les ergots ou la nervure (10) de support de l'élément mobile (9) au repos présent dans la portion inférieure (21) de l'insert creux (6).

8. Dispositif de prise de branchement selon l'une quelconque des revendications 5 à 7, caractérisé en ce que la ou les ouverture(s) d'admission secondaire(s) (14) est (sont) ménagée(s) dans la paroi latérale de la portion inférieure (21) de l'insert creux (6) et est (sont) située(s) entre les ergots ou la nervure (10) de support de l'élément mobile (9) au repos et le siège percé (11) formant l'orifice d'entrée du passage (7) pour le gaz.

9. Dispositif de prise de branchement selon la revendication 8, caractérisé en ce qu'il comporte plusieurs ouvertures d'admission secondaires (14) réparties uniformément sur la circonférence de la paroi latérale de la portion inférieure (21) de l'insert creux (6).

10. Dispositif de prise de branchement selon l'une quelconque des revendication 8 et 9, caractérisé en ce qu'il comporte deux ouvertures d'admission secondaires (14) ménagées dans la paroi latérale de la portion inférieure (21) en étant diamétralement opposées.

11. Dispositif de branchement selon l'une quelconque des revendications 1 à 10, caractérisé en ce que la portion inférieure (21) de l'insert creux (6) est munie d'un outil (23) de coupe ou de perforation réalisant la découpe ou le perçage de l'ouverture de distribution (22) dans la conduite du réseau (1) au cours de l'introduction de l'insert creux (6) dans la chemise extérieure (4).

12. Dispositif de prise de branchement selon la revendication 11, caractérisé en ce que le tranchant de l'outil de coupe (23) est situé au niveau du bord libre (23') de la portion inférieure (21) de l'insert creux (6), cette dernière portion présentant une conformation intérieure légèrement conique en direction dudit bord libre (23') de manière à pouvoir retenir la portion de conduite découpée ou coupon (24) lors de la réalisation de l'ouverture de distribution (22).

13. Dispositif de prise de branchement selon l'une quelconque des revendications 11 et 12, caractérisé en ce que la paroi latérale de la portion inférieure (21) est pourvue d'orifices oblongs (25) situés entre le bord libre (23') de la portion inférieure (21) et les ergots ou la nervure de support (10) de l'élément mobile (9) au repos et s'étendant de l'intérieur de la conduite du réseau (1) jusque dans une chambre (26) de la chemise extérieure (4), formée autour de la portion inférieure (21) de l'insert creux (6) et alimentant la ou les ouvertures d'admission secondaires (14).
